# EUROPEAN PATENT APPLICATION

(11) **EP 1 870 389 A2**
(43) Date of publication of application: **26.12.2007**
(21) Application number: 07011400.4
(22) Date of filing: 11.06.2007
(51) Int. Cl.: C04B 35/10, C04B 38/00, C04B 26/28, C04B 38/06, B28B 3/20, B28B 1/24, B28B 21/52

(54) **Extrusion or injection moding composition and method for preparing molded part**

(30) Priority: 15.06.2006 JP 2006165806
(71) Applicant: Shin-Etsu Chemical Co., Ltd., Tokyo (JP)
(72) Inventor: Hayakawa, Kazuhisa, Joetsu-shi Niigata-ken (JP); Niinobe, Shingo, Joetsu-shi Niigata-ken (JP)
(74) Representative: TER MEER - STEINMEISTER & PARTNER GbR

(57) **Abstract**

In an extrusion or injection molding composition comprising water-insoluble particles, a water-soluble binder, and water, true spherical particles having an average particle size of 0.2-20 µm are used as the water-insoluble particles. The addition of a small amount of a binder to water-insoluble particles as the substrate facilitates molding operation and enables to produce a molded part featuring a shape stability after molding.

## Description

### TECHNICAL FIELD

This invention relates to an extrusion or injection molding composition for producing a molded part of the desired shape from a powder of the desired material, and a method for preparing a molded part using the composition.

### BACKGROUND ART

In general, molded parts of the desired shape are produced by molding a powdered material and a binder into the desired shape so that the binder exerts a sufficient binding force to sustain the shape. In molding ceramics in this way, molded parts are sintered while effecting binder removal.

Depending on the desired shape to be molded, an appropriate molding technique may be selected from among a molding technique of mixing a powdered material with a binder and press molding the mixture, and a molding technique of dissolving a binder in a solvent, mixing a powdered material with the solution, sheeting the mixture to a desired thickness in the case of a sheet-like form, and evaporating off the solvent. Also, parts of more complex shape may be molded by a technique of casting a similar slurry into a mold of gypsum or the like, removing the solvent through micro-pores in the gypsum mold surface while molding, and drying to the desired shape, or an injection molding technique of injecting a body composed of a mixture of a solvent solution of a binder having a viscosity and shape-retaining ability and a desired powder material into an appropriate mold, transferring the mold shape thereto, and drying. An extrusion molding technique is also employed wherein honeycomb-shaped parts or parts of a certain cross-sectional shape such as plates or rods are molded by passing a similar body through an extrusion die having exit channels of lattice-like slits and feed channels for feeding the body to the crossings of the slits.

Although the ceramic material molding techniques described above facilitate casting or flowing of a desired material into a mold, it is essential to add a binder for binding the powder material or substrate after drying because the molded material must be dried while maintaining the shape of the mold after casting. In a common practice, a proper binder is selected so as to maintain the shape during the drying step after molding. If a binder having a strong binding force is used to stabilize the shape during the drying step, the resulting body becomes less flowing, making it difficult to fill the mold therewith. If a binder having a weak binding force is used to overcome this problem, then the shape can collapse or cracks can occur in the drying course after molding.

For overcoming the above-discussed problems, for example, JP-A 04-209747 discloses the use of a certain water-soluble hydroxypropyl methyl cellulose as a binder, but the expected effects are not always attainable depending on the form and size of ceramic particles. By contrast, JP-A 06-092715 describes to improve the plasticity and fluidity of body by combining these binders with polyalkylene glycols. JP-A 07-138076 discloses to improve the lubricity of body by adding 0.2-3% by weight of an emulsified wax and 2-7% by weight of methyl cellulose to a ceramic stock material to form a ceramic body with a plasticity to enable extrusion molding. Japanese Patent No. 2756081 discloses that the friction between the extrusion die and the body can be reduced by adding a polyoxyethylene oleyl ether or polyoxyethylene lauryl ether having a HLB of at least 10 as defined by a weight ratio of hydrophilic groups to hydrophobic groups to a cordierite ceramic stock material batch. Stating that no satisfactory improvements are made by the teaching of Japanese Patent No. 2756081, JP-A 2001-179720 describes that the friction with the body can be reduced by extrusion molding a ceramic body having 0.1 to 6.0% by weight (based on the weight of cordierite ceramic stock material) of a sorbitan fatty acid ester added thereto for thereby producing a cordierite honeycomb structure. With all these methods, however, there is left a problem that the expected effects may not be fully exerted depending on the form and size of ceramic particles, as mentioned above. Moreover, since these binders are heterogeneous to the substrate and remain as impurities to the relevant substrate, it is required to perform molding while minimizing the amount of binder added. But, no desirable effects have been achieved.

### DISCLOSURE OF THE INVENTION

An object of the present invention is to provide an extrusion or injection molding composition comprising substrate particles and a binder, from which a part is to be molded, which is improved in fluidity during molding, while maintaining a shape-retaining ability after molding and which enables such molding with a minimal amount of the binder added; and a method for preparing a molded part using the composition.

The inventors have found that the outstanding problems can be overcome using true spherical particles having a specific particle size.

In one aspect, the invention provides an extrusion or injection molding composition comprising water-insoluble particles, a water-soluble binder, and water. The water-insoluble particles are true spherical particles having an average particle size of 0.2 to 20 µm.

In a preferred embodiment, the composition comprises 100 parts by weight of the water-insoluble particles, 2 to 10 parts by weight of the water-soluble binder, and 5 to 40 parts by weight of water. Typically, the true spherical particles are water-insoluble ceramic particles, glass particles or carbon-containing synthetic polymer particles. The water-soluble binder is typically selected from among water-soluble methyl cellulose, hydroxypropyl methyl cellulose, hydroxyethyl methyl cellulose, hydroxyethyl ethyl cellulose, hydroxyethyl cellulose, and hydroxypropyl cellulose. Most often, the composition is extrusion molded into a honeycomb structure.

In another aspect, the invention provides a method for preparing a molded part consisting of water-insoluble particles, the method comprising the steps of extrusion or injection molding the above-described composition into a green part, effecting binder burnout, and sintering the green part.

### BENEFITS OF THE INVENTION

According to the invention, the use of water-insoluble true spherical particles as the substrate, despite a small amount of a binder added, facilitates molding operation and enables to produce a molded part featuring a shape stability after molding.

### DESCRIPTION OF THE PREFERRED EMBODIMENTS

True spherical water-insoluble particles used herein should have an average particle size of 0.2 to 20 µm, preferably 0.3 to 18 µm, and more preferably 0.5 to 15 µm. Particles with a smaller particle size outside the range will agglomerate significantly so that the desired effects of the invention are not expectable. Particles with a larger particle size outside the range are less flowing so that the effect of improving flow during molding is not expectable.

As used herein, the average particle size of particles is measured by a Coulter Counter by Beckman Coulter Inc. operating on an electrical sensing zone method in a special electrolyte solution.

The water-insoluble particles used herein are true spherical particles having a degree of true sphericity equal to or less than 1.1. The degree of true sphericity is the "average degree of true sphericity" described in JP-A 06-64916. The "degree of true sphericity" refers to a ratio of maximum diameter to minimum diameter of each particle while the "average degree of true sphericity" is an arithmetic average of degrees of true sphericity of randomly selected 100 particles.

Specifically, an average degree of true sphericity is determined by taking a photograph of substrate particles under an optical or electron microscope, determining a ratio of maximum diameter to minimum diameter for each of 100 particles, and calculating an average thereof. A particulate powder having an average value equal to or less than 1.1, preferably equal to or less than 1.05 is used herein. A powder with an average value in excess of 1.1 will form a body which is not improved in flow.

No particular limit is imposed on the particle size distribution of a particulate powder although a powder having a certain distribution is advantageous in improving the shape-retaining ability after molding.

The water-insoluble particles used herein as the substrate powder may be made of ceramic materials, glass materials, and synthetic polymer materials. Suitable ceramic materials include, but are not limited to, cordierite materials, alumina, mullite, silica, silicon carbide, silicon nitride, titanium oxide, barium titanate, and lead titanate zirconate. Suitable glass materials include, but are not limited to, quartz glass, soda glass, borosilicate glass, and lead glass. Suitable synthetic polymer materials include, but are not limited to, polystyrene, polypropylene, polyethylene, methyl methacrylate, and polyurethane. Also useful are water-insoluble natural polysaccharides such as cellulose and chitin.

The inventive composition comprises a water-soluble binder. Suitable binders include cellulose ethers and polyoxyethylene-polyoxypropylene surfactants. Inter alia, methyl cellulose, hydroxypropyl methyl cellulose, hydroxyethyl methyl cellulose, hydroxyethyl ethyl cellulose, hydroxyethyl cellulose, and hydroxypropyl cellulose, which have a greater shape-retaining ability after molding, are advantageous for the invention to exert its effects to a full extent.

The methyl cellulose which can be used herein is one prepared by a methyl chloride or dimethyl sulfate method and having a methoxy substitution of 26-33% by weight and a viscosity of 25-30,000 mPa-s at 20°C in a 2 wt% aqueous solution, as described in Cosmetic Ingredient Standards Remarks, Yakuji-Nippo K.K., 1984, p.1146. The hydroxyethyl cellulose which can be used herein is one prepared by reacting ethylene oxide with cellulose and having a hydroxyethyl substitution of 40-60% by weight and a viscosity of 20-100,000 mPa-s at 20°C in a 2 wt% aqueous solution, as described in Cosmetic Ingredient Standards Remarks, Yakuji-Nippo K.K., 1984, p.840. The hydroxypropyl cellulose which can be used herein is one prepared by reacting propylene oxide with cellulose and having a hydroxypropyl substitution of 50-70% by weight and a viscosity of 50-10,000 mPa-s at 20°C in a 2 wt% aqueous solution, as described in Cosmetic Ingredient Standards Remarks, Yakuji-Nippo K.K., 1984, p.849.

Mixed ethers such as hydroxypropyl methyl cellulose and hydroxyethyl methyl cellulose can be prepared by reacting ethylene oxide or propylene oxide in addition to methyl chloride or dimethyl sulfate during the methyl cellulose preparation. Use may be made of hydroxyethyl methyl cellulose and hydroxypropyl methyl cellulose having a degree of substitution of 19-30% by weight for methyl and 4-12% by weight for hydroxyethyl or hydroxypropyl and a viscosity of 50-200,000 mPa-s at 20°C in a 2 wt% aqueous solution. The degree of substitution and viscosity can be measured by the methods described in the Japanese Pharmacopoeia, 14th Edition. Those cellulose ethers having a degree of substitution outside the above-defined range may be short in water solubility and fail to produce a sufficient binding force upon drying of a molded ceramic part. Too low a viscosity may lead to a shortage of binding force whereas with too high a viscosity, the resulting body may be too viscous to extrusion mold.

According to the invention, at least one binder selected from among methyl cellulose, hydroxypropyl methyl cellulose, hydroxyethyl methyl cellulose, hydroxyethyl ethyl cellulose, hydroxyethyl cellulose, and hydroxypropyl cellulose is added preferably in an amount of 2 to 10 parts by weight, more preferably 3 to 8 parts by weight per 100 parts by weight of the water-insoluble particles (or substrate powder). If the amount of cellulose ether added is less than 2 parts by weight, the shape-retaining ability declines so that the molded part may deform under its own weight or external force. If the amount of cellulose ether added is more than 10 parts by weight, cracks are likely to occur upon binder burn-out by heating after molding and drying.

In the inventive composition, water is added preferably in an amount of 5 to 40 parts by weight, more preferably 6 to 30 parts by weight per 100 parts by weight of the water-insoluble particles. Too small an amount of water added may detract from moldability or lubricity. If the amount of water added is excessive, the article may lose dimensional accuracy due to separation of water during extrusion and shrinkage during drying.

If necessary, derivatives of glycol, glycerin, polyoxyethylene, polyoxypropylene, sorbitol and the like, and surfactants such as fatty acid esters and fatty acid salts may be added to the inventive composition as long as this does not compromise the objects of the invention.

In producing a molded part of desired shape from the extrusion or injection molding composition of the invention, conventional extrusion and injection molding techniques may be applied, and well-known molding conditions be employed. The molding is followed by binder burn-out and sintering, obtaining a molded part consisting of water-insoluble particles.

The shape of molded parts is not particularly limited. The invention is effective in producing molded parts of honeycomb structure, especially extrusion molded parts.

### EXAMPLE

Examples are given below by way of illustration and not by way of limitation.

### Examples 1 to 9

To 100 parts by weight of alumina particles having an average particle size of 0.4 to 13 µm and a degree of true sphericity of 1.01 to 1.04, available from Admatechs Co., Ltd., as shown in Table 1, were added 2.0 to 10.0 parts by weight of cellulose ether shown in Table 1 and water in the amounts shown in Table 1. They were mixed in a Super-Mixer (Kawada Mfg. Co., Ltd.) by operating an agitation blade at 1,000 rpm and then at 15°C on a compact three-roll mill (Inoue Mfg. Co., Ltd.). The resulting compound was extrusion molded into a green honeycomb structure, using a laboratory honeycomb extrusion molding machine (Miyazaki Iron Works Co., Ltd.) with a honeycomb die having a rib gage of 0.2 mm, a rib spacing of 5 mm, and a diameter of 20 mm. It was dried at 100°C for 16 hours. After drying, the honeycomb structure was heated at 500°C for 2 hours for binder burn-out and sintered in an electric furnace at 1,700°C.

In all the molding runs of Examples 1 to 9 shown in Table 1, there were obtained ceramic honeycomb structure samples in which neither waving of partitions or ribs during molding, especially waving of partitions near the outer periphery, nor cracking during the drying step after molding occurred.

**Table 1**

| | Example | | | | | | | | |
|---|---|---|---|---|---|---|---|---|---|
| | 1 | 2 | 3 | 4 | 5 | 6 | 7 | 8 | 9 |
| Alumina, average particle size (µm) | 0.4-1.0 | 7-13 | 2-8 | 0 4-1.0 | 7-13 | 2-8 | 0.4-1.0 | 7-13 | 2-8 |
| Alumina, average degree of true sphericity | 1.04 | 1.08 | 1.05 | 1.06 | 1.08 | 1.09 | 1.04 | 1.09 | 1.03 |
| Methyl cellulose | 3 | | | | | | | 3 | 2 |
| Hydroxypropyl methyl cellulose | | 2 | | | | 2 | | | 1 |
| Hydroxyethyl methyl cellulose | | | 5 | | | | | | |
| Hydroxyethyl cellulose | | | | 7 | | 1 | | | |
| Polyoxyethylene polyoxypropylene butyl ether | | | | | 10 | | 2 | | |
| Hydroxypropyl cellulose | | | | | | | | 2 | |
| Water | 22 | 25 | 23 | 24 | 22 | 23 | 21 | 20 | 19 |

Note that the amount of each component added is expressed in parts by weight per 100 parts by weight of alumina.

Methyl cellulose:
methoxy substitution, 30 wt%
viscosity @20°C/2 wt% aqueous solution, 4,000 mPa-s

Hydroxypropyl methyl cellulose:
methoxy substitution, 29 wt%
hydroxypropyl substitution, 10 wt%
viscosity @20°C/2 wt% aqueous solution, 200,000 mPa-s

Hydroxyethyl methyl cellulose:
methoxy substitution, 29 wt%
hydroxyethyl substitution, 10 wt%
viscosity @20°C/2 wt% aqueous solution, 100,000 mPa-s

Hydroxyethyl cellulose:
hydroxyethyl substitution, 55 wt%
viscosity @20°C/2 wt% aqueous solution, 4,000 mPa-s

Hydroxypropyl cellulose:
hydroxypropyl substitution, 60 wt%
viscosity @20° C/2 wt% aqueous solution, 4,000 mPa-s

### Examples 10 to 18

In these examples, the compounds of Examples 1 to 9 were extrusion molded through a honeycomb die having a rib gage of 0.1 mm, a rib spacing of 4 mm, and a diameter of 20 mm, into honeycomb structures and dried at 100°C for 16 hours. After drying, the honeycomb structures were heated at 500°C for 2 hours for binder burn-out and sintered in an electric furnace at 1,700°C.

In all the molding runs of Examples 10 to 18, there were obtained ceramic honeycomb structure samples in which neither waving of partitions during molding, especially waving of partitions near the outer periphery, nor cracking during the drying step after molding occurred.

### Comparative Examples 1 to 3

The molding runs of Examples 1 to 3 were repeated except that the substrate was replaced by alumina particles having an average particle size of 0.4 µm and a degree of true sphericity of 1.3 to 1.7, available from Showa Light Metal Co., Ltd. The molded parts had a poor shape-retaining ability, and many cracks occurred upon drying.

### Comparative Examples 4 to 9

The molding runs of Examples 1 to 3 were repeated except that the substrate was replaced by alumina particles having an average particle size of 10 µm and a degree of true sphericity of 1.8 to 2.7, available from Nippon Light Metal Co., Ltd. The molded parts had a poor shape-retaining ability, and many cracks occurred upon drying.

The data of Examples and Comparative Examples demonstrates the benefits of the invention.

## Claims

1. An extrusion or injection molding composition comprising water-insoluble particles, a water-soluble binder, and water, wherein said water-insoluble particles are true spherical particles having an average particle size of 0.2 to 20 µm.

2. The composition of claim 1, comprising 100 parts by weight of the water-insoluble particles, 2 to 10 parts by weight of the water-soluble binder, and 5 to 40 parts by weight of water.

3. The composition of claim 1 or 2, wherein said true spherical particles are water-insoluble ceramic particles, glass particles or carbon-containing synthetic polymer particles.

4. The composition of claim 1, 2 or 3, wherein said water-soluble binder is selected from the group consisting of water-soluble methyl cellulose, hydroxypropyl methyl cellulose, hydroxyethyl methyl cellulose, hydroxyethyl ethyl cellulose, hydroxyethyl cellulose, and hydroxypropyl cellulose.

5. The composition of any one of claims 1 to 4, which is to be extrusion molded into a honeycomb structure.

6. A method for preparing a molded part consisting of water-insoluble particles, the method comprising the steps of extrusion or injection molding the composition of any one of claims 1 to 5 into a green part, effecting binder burnout, and sintering the green part.
